# EUROPEAN PATENT APPLICATION

(11) **EP 4 776 341 A1**
(43) Date of publication of application: **15.07.2026**
(21) Application number: 24833402.1
(22) Date of filing: 04.11.2024
(51) Int. Cl.: H01M 4/36, H01M 4/58, H01M 4/60, H01M 4/04, H01M 4/136, H01M 4/1397, H01M 4/66, H01M 10/054

(54) **POSITIVE ELECTRODE MATERIAL, PREPARATION METHOD THEREFOR, POSITIVE ELECTRODE SHEET, AND SODIUM ION BATTERY**

(30) Priority: 31.10.2024 CN 202411541358
(71) Applicant: Hubei Wanrun New Energy Technology Co., Ltd., Shiyan, Hubei 442500 (CN)
(72) Inventor: PENG, Tangping, Shiyan, Hubei 442500 (CN); LV, Fei, Shiyan, Hubei 442500 (CN); LV, Huihui, Shiyan, Hubei 442500 (CN)
(74) Representative: Studio Torta S.p.A.
(86) International application number: PCT/CN2024/129751
(87) International publication number: WO 2026/091148

(57) **Abstract**

Provided is a cathode electrode material and a preparation method thereof, and a cathode electrode sheet and a sodium-ion battery. The cathode electrode material includes a composite particle. A molecular formula of the composite particle is represented by NaₓFe_{y}(PO₄)ₙ(P₂O₇)ₘ, wherein x is 4.2-4.5, y is 3.2-3.5, n is 2.2-2.5, and m is 0.9-1.1. The composite particle includes olivine type phosphate and polyanionic phosphate coated on the olivine type phosphate, and a molar ratio of the olivine type phosphate to the polyanionic phosphate is (0.2-0.5):1. According to the present application, by optimizing a molar ratio of olivine type phosphate to polyanionic phosphate in an iron-based composite phosphate material, and designing a microstructure of a composite particle formed by the olivine type phosphate to polyanionic phosphate, nanocrystallization and two-phase interface penetration on a crystal structure are achieved, thereby significantly improving a capacity of a cathode electrode material.

## Description

### Technical Field

The present disclosure relates to the technical field of sodium-ion batteries, and specifically, to a cathode electrode material and a preparation method thereof, and a cathode electrode sheet and a sodium-ion battery.

### Background

In recent years, much effort has been invested in developing cost-effective and high-performance cathode electrode materials for commercially available (e.g., in the field of new energy vehicles, etc.) sodium-ion batteries. In the similar field thereof, that is, in the field of lithium ion batteries, due to the great commercial success of LiFePO₄ cathodes in the lithium-ion batteries, and the good performance and low cost of this type of iron-based phosphate material, thus is considered to be one of the best choices for cathode electrode active materials in secondary batteries.

However, olivine type NaFePO₄ (NFP) is poor in thermodynamic property, and is considered to be electrochemically inert. In contrast, for a pyrophosphate Na₂FeP₂O₇ material, since a microstructure thereof has an open three-dimensional Na⁺ channel, and at the same time, P₂Oᵣ⁴⁻in its crystal thereof has a strong inducing effect, the pyrophosphate Na₂FeP₂O₇ material allows a higher working voltage (about 3.0 V), but a low reversible capacity (<100 mAh·g⁻¹) of Na₂FeP₂O₇ seriously hinders its practical application.

Both olivine type phosphate and polyanionic phosphate have certain shortcomings when being used as cathode electrode active materials for sodium-ion batteries, and their corresponding battery performances thereof are therefore also insufficient. Currently, a polyanion cathode electrode material including phosphate and a carbon layer coating a surface of the phosphate has been provided in the related art, where the phosphate includes NFPP, NFP, and NNFPO, and a ratio of contents of the NFP and the NNFPO is controlled through multiple short-time sintering. However, the provided technical solution only reduces an impurity phase in the polyanion cathode electrode material without realizing a synergistic effect among different crystal phases, such that the performance of the obtained cathode electrode material still needs to be improved.

Based on this, how to design a cathode electrode active material for a sodium-ion battery at a crystal phase level to provide superior electrochemical performance is one of the important technical problems to be solved in the art.

### Summary

The present application is mainly intended to provide a cathode electrode material and a preparation method thereof, and a cathode electrode sheet and a sodium-ion battery, so as to solve the problem of poor electrical performance of a cathode electrode material for a sodium ion battery in the related art.

In order to implement the above objective, a first aspect of the present application provides a cathode electrode material. The cathode electrode material includes a composite particle. A molecular formula of the composite particle is represented by NaₓFe_{y}(PO₄)ₙ(P₂O₇)ₘ, wherein x is 4.2-4.5, y is 3.2-3.5, n is 2.2-2.5, and m is 0.9-1.1. The composite particle includes olivine type phosphate (NaFePO₄, NFP) and polyanionic phosphate (Na₄Fe₃(PO₄)₂P₂O₇, i.e., NFPP) coated on the olivine type phosphate, and a molar ratio of the olivine type phosphate to the polyanionic phosphate is (0.2-0.5):1.

According to the present application, by optimizing the cathode electrode material, that is, in an iron-based composite phosphate material, a molar ratio of the olivine type phosphate to the polyanionic phosphate is (0.2-0.5):1, and at the same time, by designing a microstructure of the composite particle formed by the olivine type phosphate and the polyanionic phosphate, so as to cause the polyanionic phosphate phase to coat the crystals of the olivine type phosphate, nanocrystallization and two-phase interface penetration at a crystal structure level are achieved, and Na⁺ is induced to pass through an olivine type phosphate phase, such that electrochemical activation of the olivine type phosphate phase is achieved, and a capacity of iron-based composite phosphate (NxFPP) is significantly improved.

Further, a molar ratio of the olivine type phosphate to the polyanionic phosphate is (0.2-0.4):1. When the percentage of the olivine type phosphate in the material structure is too high, the polyanionic phosphate crystal phase is difficult to completely coat the olivine type phosphate crystal, causing the crystal of the olivine type phosphate separately formed on the outside of the polyanionic phosphate crystal to become an impure phase in the polyanionic phosphate crystal, resulting in a low capacity of a composite material. When the percentage of the olivine type phosphate is too low, there are accordingly too few olivine type phosphate crystals inside the polyanionic phosphate crystal, it is difficult to achieve two-phase interface penetration, and there are fewer electrochemically-activated olivine type phosphate phases, such that it is difficult to significantly improve the capacity of the composite material.

Further, in order to improve the conductivity of the obtained cathode electrode material and structure stability in a charging-discharging process, the cathode electrode material further includes a carbon layer coated on the composite particle, and based on a total weight of the cathode electrode material being 100%, a mass fraction of the carbon layer is 1.5%-3.0%.

With respect to the coated carbon layer, the preferred mass fraction is as above to form a more complete carbon coating layer, so as to improve the electronic conductivity of the cathode electrode material, thereby reducing powder internal resistance thereof and improving electrochemical performance thereof. Preferably, the carbon layer is an amorphous carbon portion formed by an organic carbon source and/or an inorganic carbon portion formed by an inorganic carbon source.

More preferably, the carbon layer is a combination of an amorphous carbon portion and an inorganic carbon portion, and based on a total weight of the carbon layer being 100%, a weight percentage of the inorganic carbon portion is 2.5%-5.0%.

For the cathode electrode material provided in the present application, the outermost carbon layer preferably contains the amorphous carbon portion formed by the organic carbon source and the inorganic carbon portion formed by the inorganic carbon source at the same time. The amorphous carbon portion is formed after a soluble organic carbon source is uniformly coated on the composite particle and then calcined, and the inorganic carbon portion is interspersed in the amorphous carbon portion, and forms a good and uniform carbon coating. The amorphous carbon portion has a higher specific surface area and a better mechanical property, the inorganic carbon portion with a higher degree of graphitization can provide better electronic conductivity, and the electrochemical performance of the cathode electrode material is further improved through the combined effects of the amorphous carbon portion and the inorganic carbon portion.

Further, powder resistivity of the cathode electrode material is 12000 Ω·cm-93000 Ω·cm. The cathode electrode material obtained in the present application has lower resistivity, and thus can cause a corresponding battery to show a higher charging specific capacity and discharging specific capacity when being used as a cathode electrode active material for a sodium-ion battery.

A second aspect of the present application provides a method for preparing a cathode electrode material. The preparation method includes: preparing a sodium source, an iron source, and a phosphorus source into a first slurry; performing first drying and first calcination on the first slurry to obtain a precursor; preparing the precursor and a carbon source into a second slurry; and performing second drying and second calcination on the second slurry to obtain the cathode electrode material.

In the preparation process provided in the present application, two-step process is used, that is, the sodium source, the iron source, and the phosphorus source are prepared to obtain the precursor; then the carbon source and the precursor form a uniform slurry; and after the second drying and the second calcination, the carbon source is uniformly coated outside of pure phase crystal particles of the precursor to obtain the cathode electrode material with low powder resistivity, facilitating improvement of the electronic conductivity and capacity of the cathode electrode material. Meanwhile, during preparation, crystal particles with certain sizes have been formed in a precursor pure phase obtained after the first drying and the first calcination, such that a crystal particle structure is not affected by coating the carbon for the second time. Therefore, the two-step preparation process facilitates the preparation of the cathode electrode material having a coating structure provided in the present application, and improvement of a compaction density and tap density of the obtained cathode electrode material.

In some embodiments, in the first slurry, a molar ratio of the sodium source, the iron source, and the phosphorus source is (4.2-4.86):(3.2-3.5):(4.2-4.5). In this addition relationship, compared to the finally-formed composite particle, there are excessive sodium sources, such that a Na loss is avoided during high temperature sintering, so as to obtain the composite particle with a more complete crystal form.

Further, in order to cause a precursor crystal phase obtained through the first calcination to have higher crystal purity and better structure stability and ionic diffusion performance, and ultimately show a higher energy density in the sodium-ion battery, preferably, the first calcination includes first-time calcination and second-time calcination, in which the temperature of the first-time calcination is 400 °C-500 °C, and time for the first-time calcination is 1.5 h-2.5 h; and the temperature of the second-time calcination is 550 °C-650 °C, and time for the second-time calcination is 10 h-14 h. Through the above calcination manner and the setting of the temperature and time parameters, the olivine type phosphate and the polyanionic phosphate are formed in sequence, so as to form the composite particle in which the polyanionic phosphate coats the olivine type phosphate, and to better combine the two crystal phases, thereby significantly improving the electrochemical performance of the obtained cathode electrode material. Meanwhile, in order to reduce the introduction of impurities, more preferably, the first calcination is performed under a protective atmosphere, so as to obtain the cathode electrode material with higher electrochemical performance.

Preferably, the sodium source is selected from one or more of sodium bicarbonate, sodium phosphate, sodium monohydrogen phosphate, and sodium dihydrogen phosphate; the iron source is selected from one or more of anhydrous iron phosphate, iron phosphate polyhydrate, iron monohydrogen phosphate, and ferrous oxalate; and the phosphorus source is selected from one or more of anhydrous iron phosphate, ammonium dihydrogen phosphate, sodium phosphate, sodium monohydrogen phosphate, sodium dihydrogen phosphate, iron phosphate polyhydrate, and iron monohydrogen phosphate.

Further, the carbon source includes an organic carbon source and/or an inorganic carbon source; the organic carbon source is selected from one or more of citric acid, glucose, sucrose, soluble starch, and polyethylene glycol; and/or the inorganic carbon source is selected from one or more of graphite, a carbon nanotube, and graphene. The above carbon source can undergo a fuller graphitization reaction in the second calcination process, and a coating degree is more uniform, such that the electrochemical performance of the obtained cathode electrode material is optimized more significantly.

Preferably, the carbon source includes the soluble starch, the polyethylene glycol, and the graphene; more preferably, the polyethylene glycol is PEG-2000; more preferably, in the carbon source, a ratio of addition amounts of the soluble starch, the PEG-2000, and the graphene is (1.2-1.5):1:(0.2-0.4). The inventors obtain the carbon source combination by optimizing types of carbon sources used through numerous experiments. The porosity of an amorphous carbon layer formed after sintering of the soluble starch is high, but powder resistivity is low. A carbon layer formed after sintering of the PEG-2000 is more compact, a compaction density of the material is increased through compound use of the two carbon layers, the powder resistivity of the material is reduced, and the electrochemical performance of the obtained cathode electrode material in the sodium-ion battery is improved ultimately. Meanwhile, since the graphene has a unique sheet structure (two-dimensional structure), so as to coat the precursor and form a point-surface contact with the precursor. Meanwhile, the compound use of the soluble starch, the PEG-2000, and the graphene facilitates reduction in specific surface area BET of the cathode electrode material, reduction in water absorption of the obtained cathode electrode material, and improvement of the processing performance of the cathode electrode material. Considering unavoidable losses in the subsequent calcination process, and the cooperative effect of the soluble starch, the PEG-2000, and the graphene, the soluble starch, the PEG-2000, and the graphene are compounded and used in the above use amount relationship, facilitating better coordination of the superior performance of the graphene, the polyethylene glycol, and the soluble starch, so as to obtain the carbon layer with uniform coating and good conductivity, thereby improving the electrochemical performance of the obtained cathode electrode material.

Further, the second calcination includes the following performed in sequence: first-stage calcination with a temperature being 40 °C-60 °C and temperature-holding time for the first-stage calcination being 1 h-2 h; second-stage calcination with a temperature being 100 °C-130 °C and temperature-holding time for the second-stage calcination being 0.5 h-1.5 h; third-stage calcination with a temperature being 180 °C-210 °C and temperature-holding time for the third-stage calcination being 2 h-4 h; and fourth-stage calcination with a temperature being 500 °C-600 °C and temperature-holding time for the fourth-stage calcination being 2 h-6 h.

In the present application, by optimizing the specific steps in the second calcination into four stages which are performed in sequence, segmented decomposition of the carbon source mixed with the precursor is achieved to avoid significant decomposition of the carbon source at a certain temperature range to generate more gases, as well as a large number of other escapes to cause the volume of the material to expand dramatically, leading to reduction in bowl packing rate and reduction in electrochemical performance. Furthermore, calcination in stages causes gas escape to be slower, so as to better avoid reduction in compaction density, increase in BET specific surface area, deterioration in electrochemical performance, etc. due to rapid shrinkage after a large number of gap structures first formed in the obtained cathode electrode material.

Further, heating rates of the first-stage calcination, second-stage calcination, third-stage calcination, and fourth-stage calcination are each independently 3 °C/min-10 °C/min. The heating rates can better match the states of corresponding composite materials in the above total four stages of calcination, so as to obtain the cathode electrode material with superior phase purity and crystallinity, thereby improving the performance thereof in the sodium-ion battery, and ultimately optimizing a capacity of an obtained battery.

A third aspect of the present application provides a cathode electrode sheet. The cathode electrode sheet includes the above cathode electrode material, or a cathode electrode material prepared by the above method for preparing a cathode electrode material. The cathode electrode material or the obtained cathode electrode material has lower powder resistivity, and thus can cause the cathode electrode sheet in which the cathode electrode material is located to have more excellent overall performance.

A fourth aspect of the present application provides a sodium-ion battery. The sodium-ion battery includes the above cathode electrode sheet. Since the cathode electrode material in the cathode electrode sheet obtained in the present application has excellent performance, the sodium-ion battery in which the cathode electrode sheet is located shows a higher energy density, higher capacity and efficiency accordingly, and also has excellent cycling stability.

The above descriptions are only an overview of the technical solutions of the present application. In order to have a clearer understanding of the technical means of the present application, and implement same according to the contents of the specification and in order to make the above and other purposes, features, and advantages of the present application more obvious and easier to understand, the specific embodiments of the present application are specifically listed below.

### Brief Description of the Drawings

In order to more clearly explain the technical solutions of the present application, a brief introduction will be given below to the drawings required to be used in the present application. It is apparent that the drawings in the following descriptions are merely some implementations of the present application. Other drawings can be obtained from those of ordinary skill in the art according to these drawings without any creative work.
Fig. 1 is a Scanning Electron Microscope (SEM) result diagram of a cathode electrode material obtained according to Embodiment 1.
Fig. 2 is an SEM result diagram of a cathode electrode material obtained according to Embodiment 14.
Fig. 3 is an SEM result diagram of a cathode electrode material obtained according to Embodiment 15.
Fig. 4 is a process flow diagram of a method for preparing a cathode electrode material according to embodiments.

### Detailed Description of the Embodiments

The embodiments of the technical solutions of the present application will be described in detail below in conjunction with the accompanying drawings. The following embodiments are only intended to provide a clearer explanation of the technical solutions of the present application, and therefore they are only used as examples and rather than as limitations to the scope of protection of the present application.

Unless otherwise defined, all technical and scientific terms as used herein have the same meanings as those commonly understood by those skilled in the technical field of the present application; the terms as used herein are only intended for the purpose of describing specific embodiments rather than limiting the present application; and the terms "including" and "having" in the description and claims, as well as the accompanying drawings of the present application, and any variations thereof, are intended to cover non-exclusive inclusion.

In the description of embodiments of the present application, the technical terms "first" and "second", etc., are only used to distinguish different objects and cannot be understood as indicating or implying relative importance or implicitly indicating the number, specific order or primary and secondary relationships of the indicated technical features. In the description of embodiments of the present application, "multiple" means more than two, unless otherwise specifically defined explicitly.

Reference to "embodiments" herein means that specific features, structures, or characteristics described in combination with embodiments may be included in at least one embodiment of the present application. The phrase appearing at various positions in the specification does not necessarily refer to the same embodiment, nor is it an independent or alternative embodiment mutually exclusive with other embodiments. Those skilled in the art will explicitly and implicitly understand that the embodiments described herein can be combined with other embodiments.

In the description of the embodiments of the present application, the term "and/or" is only used to describe an association relationship describing the associated objects, indicating that there can be three kinds of relationships, for example "A" and/or "B" may indicate three cases: existence of "A" alone, coexistence of "A" and "B", and existence of "B" alone. In addition, the character "/" as used herein generally indicates an "or" relationship between the front and back associated objects.

In the description of the embodiments of the present application, the term "multiple" refers to more than two (including two), similarly, "multiple groups" refers to more than two groups (including two groups), and "multiple pieces" refers to more than two pieces (including two pieces).

As described in Background, a cathode electrode material for a sodium-ion battery in the related art has the problem of poor electrical performance. In order to solve the above technical problem, a first aspect of the present application provides a cathode electrode material. The cathode electrode material includes a composite particle. A molecular formula of the composite particle is represented by NaₓFe_{y}(PO₄)ₙ(P₂O₇)ₘ, wherein x is 4.2-4.5, y is 3.2-3.5, n is 2.2-2.5, and m is 0.9-1.1. The composite particle includes olivine type phosphate (NaFePO₄, NFP) and polyanionic phosphate (Na₄Fe₃(PO₄)₂P₂O₇, i.e., NFPP) coated on the olivine type phosphate, and a molar ratio of the olivine type phosphate to the polyanionic phosphate is (0.2-0.5):1.

In some embodiments, the molecular formula of the composite particle is represented by NaₓFe_{y}(PO₄)ₙ(P₂O₇)ₘ, where x is 4.2, 4.3, 4.4, or 4.5, y is 3.2, 3.3, 3.4, or 3.5, n is 2.2, 2.3, 2.4, or 2.5, and m is 0.9 or 1.0.

According to the present application, by optimizing the cathode electrode material, that is, in an iron-based composite phosphate material, a molar ratio of the olivine type phosphate to the polyanionic phosphate is (0.2-0.5):1, and at the same time, by designing the microstructure of the composite particle formed by the olivine type phosphate and the polyanionic phosphate, so as to cause a polyanionic phosphate phase to coat nano crystals of the olivine type phosphate, nanocrystallization and two-phase interface penetration at a crystal structure level are achieved, and Na⁺ is induced to pass through an olivine type phosphate phase, such that electrochemical activation of the olivine type phosphate phase is achieved, and a capacity of iron-based composite phosphate (precursor, NxFPP) is significantly improved. Specifically, due to a higher electrochemical performance of the polyanionic phosphate, especially in terms of a theoretical specific capacity, a voltage platform, and cycling stability, by coating the polyanionic phosphate on the outside of the olivine type phosphate, the overall electrochemical performance of the obtained material can be significantly improved, such that after a sodium-ion battery is prepared by using the cathode electrode material, the battery has better performance during charging and discharging processes.

Furthermore, in terms of structure stability, the coating of the polyanionic phosphate phase provides a structure support for the olivine type phosphate phase, such that structure damages during the charging-discharging processes are reduced, thereby improving the cycling stability of the material. Meanwhile, the coating of the polyanionic phosphate improves a Na⁺ ion diffusion path of the olivine type phosphate for smoother diffusion, thereby improving a charging rate and discharging rate of the battery. Moreover, such coating structure can also reduce side reactions between the olivine type phosphate and electrolyte, thereby prolonging the service life of the battery.

Further, coordinately considering factors such as electrochemical performance, cycling stability, ion diffusion efficiency, synthesis process cost, etc. of the polyanionic phosphate phase, which are different from those of the olivine type phosphate phase, in the present application, a mole ratio of the olivine type phosphate to the polyanionic phosphate is strictly controlled to be (0.2-0.5):1, so as to achieve the complete coating of the polyanionic phosphate phase on the olivine type phosphate phase, thereby avoiding unsatisfactory capacity improvement due to formation of impurities or inability to achieve permeation of a two-phase interface.

That is to say, the cathode electrode material having the above structure and provided in the present application shows significant advantage in terms of energy density, electrochemical performance, structure stability, safety, etc.

Further, a molar ratio of the olivine type phosphate to the polyanionic phosphate is (0.2-0.4):1. The inventors further adjust the molar ratio of the olivine type phosphate to the polyanionic phosphate through extensive experiments and creative work, and the molar ratio is preferably (0.2-0.4):1. It is due to the fact that when the percentage of the olivine type phosphate in the material structure is too high, the polyanionic phosphate crystal phase is difficult to completely coat a nanocrystalline phase of the olivine type phosphate, the olivine type phosphate separately forms crystals and is distributed outside the polyanionic phosphate crystals to become the impure phase among the polyanionic phosphate crystals, resulting in a low capacity of the composite material. When the percentage of the olivine type phosphate is too low, there are accordingly too few nanocrystalline phases of the olivine type phosphate inside the polyanionic phosphate crystal, it is difficult to form sufficient two-phase interface penetration, and there are fewer electrochemically-activated olivine type phosphate phases, such that the capacity of the composite material cannot be significantly improved.

It is to be additionally noted that, in a practical application, for the cathode electrode material provided in the present application, since the cathode electrode material has inevitable P losses during the sintering process and uncertainty in conversion of PO₄³⁻ to P₂O₇⁴⁻, a relationship between the molecular formula of the composite particle and the mole ratio of the olivine type phosphate to the polyanionic phosphate may not completely correspond to each other, but the above relationship corresponds within a detection limit range.

Specifically, the molecular formula of the composite particle is Na_{4.2}Fe_{3.2}(PO₄)_{2.2}P₂O₇, and in this case, the mole ratio of the olivine type phosphate to the polyanionic phosphate is 0.2:1; or the molecular formula of the composite particle is Na_{4.3}Fe_{3.3}(PO₄)_{2.3}P₂O₇, and in this case, the mole ratio of the olivine type phosphate to the polyanionic phosphate is 0.3:1; or the molecular formula of the composite particle is Na_{4.4}Fe_{3.4}(PO₄)_{2.4}P₂O₇, and in this case, the mole ratio of the olivine type phosphate to the polyanionic phosphate is 0.4:1; or the molecular formula of the composite particle is Na_{4.5}Fe_{3.5}(PO₄)_{2.5}P₂O₇, and in this case, the mole ratio of the olivine type phosphate to the polyanionic phosphate is 0.5:1.

Further, in order to improve the conductivity of the obtained cathode electrode material and structure stability in a charging-discharging process, the cathode electrode material further includes a carbon layer coated on the composite particle, and based on a total weight of the cathode electrode material being 100%, a mass fraction of the carbon layer is 1.5%-3.0%, for example, 1.5%, 2.0%, 2.5%, or 3.0%. With respect to the coated carbon layer, the preferred mass fraction is as above, such that a more complete carbon coating layer is formed without unduly increasing the resistance to sodium ion transport, thereby improving electrochemical performance thereof. Preferably, the carbon layer is an amorphous carbon portion formed by an organic carbon source and/or an inorganic carbon portion formed by an inorganic carbon source. More preferably, the carbon layer is a combination of an amorphous carbon portion and an inorganic carbon portion, and based on a total weight of the carbon layer being 100%, a weight percentage of the inorganic carbon portion is 2.5%-5.0%, for example, 2.5%, 3.0%, 3.5%, 4.0%, 4.5%, or 5.0%. For the cathode electrode material provided in the present application, the outermost carbon layer preferably contains the amorphous carbon portion formed by the organic carbon source and the inorganic carbon portion formed by the inorganic carbon source at the same time. The amorphous carbon portion is formed after a soluble organic carbon source is uniformly coated on the composite particle and then calcined, and the inorganic carbon portion is interspersed in the amorphous carbon portion, and forms a good and uniform carbon coating. The amorphous carbon portion has a higher specific surface area and a better mechanical property, the inorganic carbon portion with a higher degree of graphitization can provide better electronic conductivity, and the electrochemical performance of the cathode electrode material is further improved through the combined effects of the amorphous carbon portion and the inorganic carbon portion.

Further, powder resistivity of the cathode electrode material is 12000 Ω·cm-93000 Ω·cm, preferably 17000 Ω·cm-33000 Ω·cm, for example, 17050 Ω·cm, 17600 Ω·cm, 18400 Ω·cm, 18900 Ω·cm, 19900 Ω·cm, or 32070 Ω·cm. A tap density is 0.9 g/mL-1.2 g/mL, preferably 1.14 g/mL-1.19 g/mL, for example, 1.14 g/mL, 1.17 g/mL, 1.18 g/mL, or 1.19 g/mL. A compaction density is 1.7 g/cm³-2.2 g/cm³, preferably 1.95 g/cm³-2.18 g/cm³, for example, 1.98 g/cm³, 2.08 g/cm³, 2.12 g/cm³, 2.13 g/cm³, 2.15 g/cm³, or 2.16 g/cm³. A bowl packing rate is 60.0%-76.5%, preferably 72.3%-76.1%, for example, 72.30%, 75.01%, 75.38%, 75.47%, 76.00%, or 76.03%. A specific surface area is 9 m²/g-50 m²/g, preferably 11.5 m²/g-35.7 m²/g, for example, 11.71 m²/g, 12.00 m²/g, 12.30 m²/g, 12.85 m²/g, 14.63 m²/g, or 35.67 m²/g. The cathode electrode material obtained in the present application is higher in compaction density and lower in specific surface area, especially smaller in resistivity, and thus can cause a corresponding battery to show a higher charging specific capacity and discharging specific capacity when being used as a cathode electrode active material for a sodium-ion battery.

A second aspect of the present application provides a method for preparing a cathode electrode material. The preparation method includes: preparing a sodium source, an iron source, and a phosphorus source into a first slurry; performing first drying and first calcination on the first slurry to obtain a precursor; preparing the precursor and a carbon source into a second slurry; and performing second drying and second calcination on the second slurry to obtain the cathode electrode material.

In the preparation process provided in the present application, two-step process is used, that is, the sodium source, the iron source, and the phosphorus source are prepared to obtain the precursor, which is a compound of the olivine type phosphate and the polyanionic phosphate; then the carbon source and the precursor form a uniform slurry; and after the second drying and the second calcination, the carbon source is uniformly coated outside of pure phase crystal particles of the precursor to obtain the cathode electrode material with low powder resistivity, facilitating improvement of the electronic conductivity of the obtained cathode electrode material. Therefore, the cathode electrode material prepared by the method, that is, a NxFPP/C composite material, has a higher capacity. Meanwhile, during preparation, crystal particles with certain sizes have been formed in a precursor pure phase obtained after the first drying and the first calcination, such that a crystal particle structure of the precursor is not affected by coating the carbon for the second time. Therefore, the two-step preparation process facilitates the preparation of the cathode electrode material having a coating structure provided in the present application, and improvement of a compaction density and tap density of the obtained cathode electrode material.

In a one-step preparation process commonly used in the art, in addition to an insoluble iron source and some insoluble carbon sources, other raw materials are soluble in water to form a uniform slurry, moisture is rapidly evaporated during drying, the soluble sodium salt, phosphate salt, and carbon source are mixed and coated on the outsides of the insoluble iron source and some insoluble carbon sources, and the carbon layer formed by the carbon sources during sintering is interspersed in the mixture, which hinders migration and integration of other ions to a certain extent. Meanwhile, due to the growth fusion of the crystal particles of the precursor, the carbon layer cannot be uniformly coated on the outsides of the crystal particles of the precursor, resulting in high powder resistivity. Furthermore, the carbon source is interspersed in an inorganic phase, which hinders the growth of the crystal particles of the precursor to a certain extent; and there are more pore structures left due to evaporation of the carbon source during sintering, smaller crystal particles of the precursor are inlaid therein to be unable to form effectively filling and support, leading to low compaction density and tap density of a composite material formed by the one-step method.

It is to be additionally noted that, in a practical application, for the cathode electrode material provided in the present application, since the cathode electrode material has inevitable P losses during the sintering process and uncertainty in conversion of PO₄³⁻ to P₂O₇⁴⁻, a relationship between the molecular formula of the composite particle and the mole ratio of the olivine type phosphate to the polyanionic phosphate may not completely correspond to each other, but the above relationship corresponds within a detection limit range.

In some embodiments, in the first slurry, a molar ratio of the sodium source, the iron source, and the phosphorus source is (4.2-4.86):(3.2-3.5):(4.2-4.5), for example, 4.2:3.2:4.2, 4.5:3.3:4.2, or 4.8:3.2:4.5. In the addition relationship, compared to the finally-formed composite particle, there are excessive sodium sources, preferably, the mass fraction of the excessive sodium source is 5.0%-5.5%, for example, 5.0%, 5.1%, 5.2%, 5.3%, 5.4%, or 5.5%, which is due to the fact that, through numerous experiments by the inventors, a Na loss during high temperature sintering is avoided, so as to obtain the composite particle with a more complete crystal form.

Further, in order to cause a precursor crystal phase obtained through the first calcination to have higher purity and better structure stability and ionic diffusion performance, and ultimately show a higher energy density in the sodium-ion battery, preferably, the first calcination includes first-time calcination and second-time calcination, in which the temperature of the first-time calcination is 400 °C-500 °C, for example, 440 °C, 450 °C, or 460 °C, and time for the first-time calcination is 1.5 h-2.5 h; and the temperature of the second-time calcination is 550 °C-650 °C, for example, 580 °C, 600 °C, or 620 °C, and time for the second-time calcination is 10 h-14 h, for example, 11 h, 12 h, or 13 h. Through the above calcination manner and the setting of the temperature and time parameters, the olivine type phosphate and the polyanionic phosphate are formed in sequence, so as to form the composite particle in which the polyanionic phosphate coats the olivine type phosphate, and to better combine the two crystal phases, thereby significantly improving the electrochemical performance of the obtained cathode electrode material. Meanwhile, in order to reduce the introduction of impurities, more preferably, the first calcination is performed under a protective atmosphere, so as to obtain the cathode electrode material with higher electrochemical performance.

Further, the carbon source includes an organic carbon source and/or an inorganic carbon source. Further, the inventors preferably select types of carbon sources through extensive experiments, and finds that when the organic carbon source is selected from one or more of citric acid, glucose, sucrose, soluble starch, and polyethylene glycol; and/or the inorganic carbon source is selected from one or more of graphite, a carbon nanotube, and graphene, the carbon source can undergo a fuller graphitization reaction in the second calcination process, and a coating degree is more uniform, such that the electrochemical performance of the obtained cathode electrode material is optimized more significantly.

In several typical implementations, preferably, the carbon source includes the soluble starch, the polyethylene glycol, and the graphene; more preferably, the polyethylene glycol is PEG-2000; more preferably, in the carbon source, a ratio of addition amounts of the soluble starch, the PEG-2000, and the graphene is (1.2-1.5):1:(0.2-0.4), for example, 1.24:1:0.4, 1.4:1:0.2, or 1.48:1:0.2, preferably (1.25-1.5):1:(0.2-0.3). The inventors obtain the carbon source combination by optimizing types of carbon sources used through numerous experiments. The porosity of an amorphous carbon layer formed after sintering of the soluble starch is high, but powder resistivity is low. A carbon layer formed after sintering of the PEG-2000 is more compact, a compaction density of the material is increased through compound use of the two carbon layers, the powder resistivity of the material is reduced, and the electrochemical performance of the obtained cathode electrode material in the sodium-ion battery is improved ultimately. Meanwhile, since the graphene has a unique sheet structure (two-dimensional structure), so as to coat the NxFPP and form a point-surface contact with the NxFPP. Meanwhile, the compound use of the soluble starch, the PEG-2000, and the graphene facilitates reduction in specific surface area BET of the cathode electrode material, reduction in water absorption of the obtained cathode electrode material, and improvement of the processing performance of the material. Considering unavoidable losses in the subsequent calcination process, and the cooperative effect of the soluble starch, the PEG-2000, and the graphene, the soluble starch, the PEG-2000, and the graphene are compounded and used in the above use amount relationship, facilitating better coordination of the superior performance of the graphene, the polyethylene glycol, and the soluble starch, so as to obtain the carbon layer with uniform coating and good conductivity, thereby improving the electrochemical performance of the obtained cathode electrode material. Meanwhile, if the graphene is added excessively, the capacity and powder resistivity of the material are not significantly improved, on the contrary, the graphene is expensive, and a high addition leads to a higher production cost of the composite material, which is not conductive to the low-cost advantage of the sodium-ion battery.

Specifically, the sodium source used in the present application is selected from one or more of sodium bicarbonate, sodium phosphate, sodium monohydrogen phosphate, and sodium dihydrogen phosphate; the iron source is selected from one or more of anhydrous iron phosphate, iron phosphate polyhydrate, iron monohydrogen phosphate, and ferrous oxalate; and the phosphorus source is one or more of anhydrous iron phosphate, ammonium dihydrogen phosphate, sodium phosphate, sodium monohydrogen phosphate, sodium dihydrogen phosphate, iron phosphate polyhydrate, and iron monohydrogen phosphate.

Further, the second calcination includes the following performed in sequence: first-stage calcination with a temperature being 40 °C-60 °C, for example, 45 °C, 50 °C, or 55 °C, and temperature-holding time for the first-stage calcination being 1 h-2 h; second-stage calcination with a temperature being 100 °C-130 °C, for example, 110 °C, 120 °C, 130 °C, and temperature-holding time for the second-stage calcination being 0.5 h-1.5 h; third-stage calcination with a temperature being 180 °C-210 °C, for example, 190 °C, 200 °C, or 210 °C, and temperature-holding time for the third-stage calcination being 2 h-4 h; and fourth-stage calcination with a temperature being 500 °C-600 °C, for example, 540 °C, 550 °C, or 560 °C, and temperature-holding time for the fourth-stage calcination being 2 h-6 h. In the present application, by optimizing the specific steps in the second calcination into four stages which are performed in sequence, segmented decomposition of the carbon source mixed with the precursor is achieved to avoid significant decomposition at a certain temperature range to generate more gases, as well as a large number of other escapes to cause the volume of the material to expand dramatically, leading to reduction in bowl packing rate and reduction in electrochemical performance. Furthermore, calcination in stages causes gas escape to be slower, so as to better avoid reduction in compaction density, increase in BET specific surface area, deterioration in electrochemical performance, etc. due to rapid shrinkage after a large number of gap structuresfirst formed in the obtained cathode electrode material.

Further, in order to match the states of corresponding composite materials in the above total four stages of calcination, so as to obtain the cathode electrode material with superior phase purity and crystallinity, thereby improving the performance thereof in the sodium-ion battery, and ultimately optimizing a capacity of an obtained battery, preferably, heating rates of the first-stage calcination, second-stage calcination, third-stage calcination, and fourth-stage calcination are each independently 3 °C/min-10 °C/min, for example, 6 °C/min, 6.5 °C/min, or 7.0 °C/min.

A third aspect of the present application provides a cathode electrode sheet. The cathode electrode sheet includes the above cathode electrode material, or a cathode electrode material prepared by the above method for preparing a cathode electrode material. The cathode electrode material or the obtained cathode electrode material has lower powder resistivity, and thus can cause the cathode electrode sheet in which the cathode electrode material is located to have more excellent overall performance.

A fourth aspect of the present application provides a sodium-ion battery. The sodium-ion battery includes the above cathode electrode sheet. Since the cathode electrode material in the cathode electrode sheet obtained in the present application has excellent performance, the sodium-ion battery in which the cathode electrode sheet is located shows a higher energy density, higher capacity and efficiency accordingly, and also has excellent cycling stability.

The present disclosure is further described in detail below with reference to specific embodiments, and the embodiments cannot be construed as limiting the scope of protection claimed in the present application.

Unless otherwise defined, all technical terms used hereinafter have the same meaning as commonly understood by those skilled in the art. The technical terms used herein is for the purpose of describing specific embodiments only and is not intended to limit the scope of protection of the present application.

Some specific embodiments are listed below. It should be noted that the embodiments described below are exemplary and are only intended to explain the present application, which cannot be understood as limitations to the present application. If no specific technology or conditions are indicated in the examples, the technology or conditions described in the literature in the art or the product specification shall be followed. The reagents or instruments used of which the manufacturers are not indicated are conventional products that are commercially available.

### I. Preparation method

### Embodiment 1

A method for preparing a cathode electrode material:
(1) Sodium bicarbonate was used as a sodium source, anhydrous iron phosphate was used as an iron source and a phosphorus source, ammonium dihydrogen phosphate was used as a phosphorus source, feeding was performed based on a molecular formula of Na_{4.2}Fe_{3.2}(PO₄)_{2.2}P₂O₇ (i.e., a mole ratio of olivine type phosphate to polyanionic phosphate was 0.2:1), that is, feeding was performed based on a molar ratio of sodium source:iron source:phosphorus source = 4.2:3.2:4.2, and there was a 5.5% excess of the sodium source, and water was used as dispersion medium, so as to obtain a first slurry.
(2) Spray-drying was performed on the first slurry, and then first-time calcination was heated from room temperature to 450 °C at 5 °C/min and performed for 2 h, and second-time calcination was heated to 600 °C at 5 °C/min and performed for 12 h, so as to obtain a precursor.
(3) Soluble starch, polyethylene glycol PEG-2000, and graphene were used as carbon sources, and the carbon sources were added based on the content of a carbon layer of a cathode electrode material finally obtained being 3% and a weight ratio of the soluble starch, polyethylene glycol PEG-2000, and graphene added being 1.4:1:0.2. The carbon sources were mixed with the precursor, and a second slurry was prepared by using water as the dispersion medium.
(4) Spray-drying was performed on the second slurry, and the second calcination was performed at a heating rate of 6.5 °C/min, with a total of four stages of calcination, so as to obtain the cathode electrode material, and conditions for the second calcination were respectively as follows:
   First-stage calcination with a temperature being 50 °C and temperature-holding time for the first-stage calcination being 1.5 h;
   second-stage calcination with a temperature being 120 °C and temperature-holding time for the second-stage calcination being 1 h;
   third-stage calcination with a temperature being 200 °C and temperature-holding time for the third-stage calcination being 3 h; and
   fourth-stage calcination with a temperature being 550 °C and temperature-holding time for the fourth-stage calcination being 4 h.

After the second calcination, the two organic carbon sources of the soluble starch and the polyethylene glycol PEG-2000 in the carbon layer were converted into amorphous carbon portions, the inorganic carbon source graphene was converted into an inorganic carbon portion, a mass ratio of the carbon layers provided by the three was 4.5:5:0.5. That is, based on a total weight of the carbon layers being 100%, a weight percentage of the inorganic carbon portion was 5.0%.

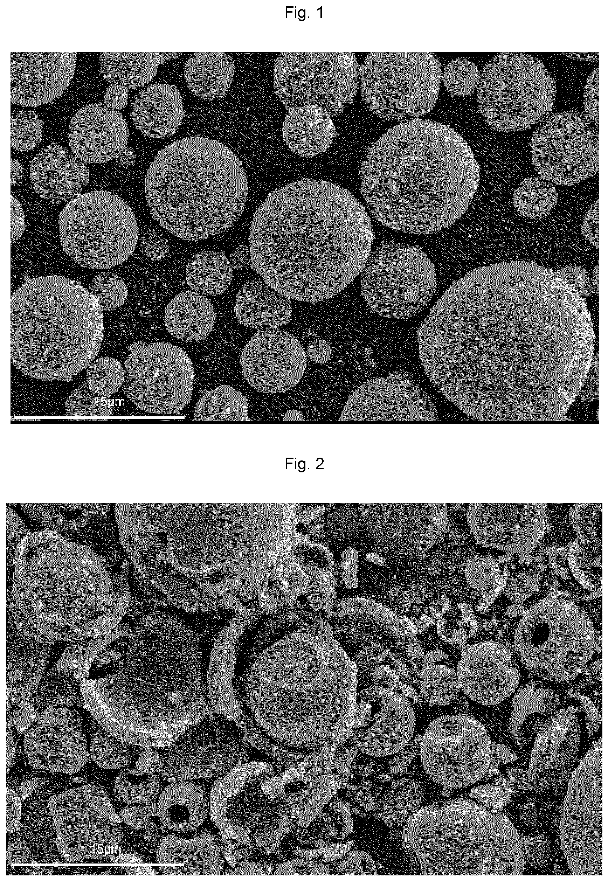

An SEM characterization result diagram of the obtained cathode electrode material was shown in Fig. 1.

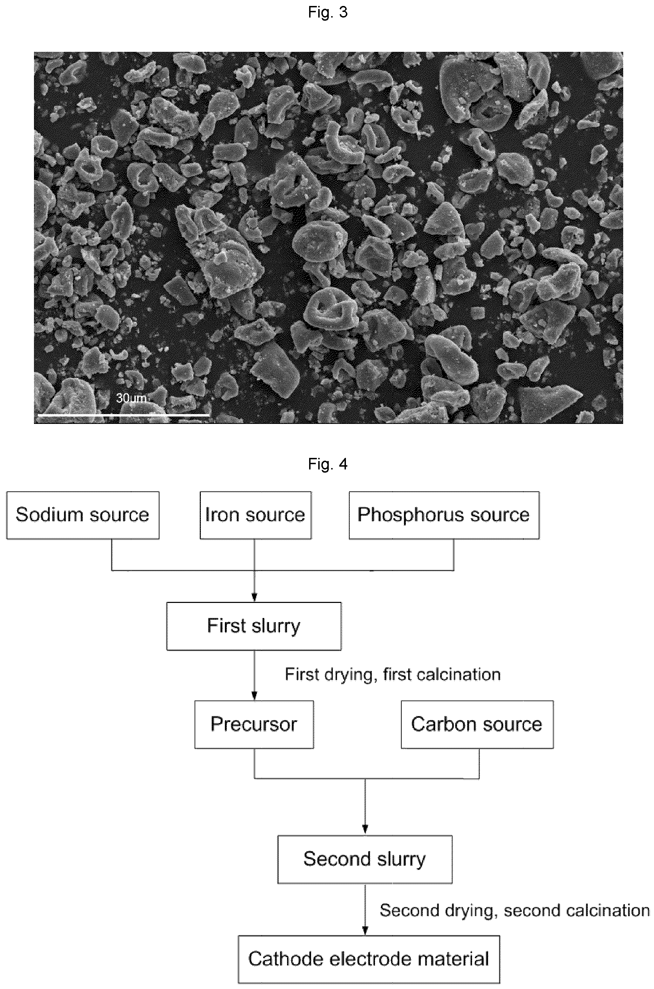

A process flow diagram of a method for preparing the cathode electrode material was shown in Fig. 4.

### Embodiment 2

A method for preparing a cathode electrode material:
A difference between this embodiment and Embodiment 1 only lied in that, the amounts of various raw materials added changed to cause a mole ratio of olivine type phosphate to polyanionic phosphate in a composite particle in the obtained cathode electrode material to be 0.3:1. A molecular formula of the composite particle was Na_{4.3}F_{23.3}(PO₄)_{2.3}P₂O₇.

### Embodiment 3

A method for preparing a cathode electrode material:
A difference between this embodiment and Embodiment 1 only lied in that, the amounts of various raw materials added changed to cause a mole ratio of olivine type phosphate to polyanionic phosphate in a composite particle in the obtained cathode electrode material to be 0.4:1. A molecular formula of the composite particle was Na_{4.4}Fe_{3.4}(PO₄)_{2.4}P₂O₇.

### Embodiment 4

A method for preparing a cathode electrode material:
A difference between this embodiment and Embodiment 1 only lied in that, the amounts of various raw materials added changed to cause a mole ratio of olivine type phosphate to polyanionic phosphate in a composite particle in the obtained cathode electrode material to be 0.5:1. A molecular formula of the composite particle was Na_{4.5}Fe_{3.5}(PO₄)_{2.5}P₂O₇.

### Embodiment 5

A method for preparing a cathode electrode material:
A difference between this embodiment and Embodiment 1 only lied in that, in the carbon source added in step (3), the content of the carbon layer in the finally obtained cathode electrode material was still 3%, and the weight ratio of the soluble starch, polyethylene glycol PEG-2000, and graphene added was changed to 1.48:1:0.2.

After the second calcination, the two organic carbon sources of the soluble starch and the polyethylene glycol PEG-2000 in the carbon layer were converted into amorphous carbon portions, the inorganic carbon source graphene was converted into an inorganic carbon portion, a mass ratio of the carbon layers provided by the three was 4.75:5:0.25. That is, based on a total weight of the carbon layers being 100%, a weight percentage of the inorganic carbon portion was 2.5%.

### Embodiment 6

A method for preparing a cathode electrode material:
A difference between this embodiment and Embodiment 1 only lied in that, in the carbon source added in step (3), the content of the carbon layer in the finally obtained cathode electrode material was still 3%, and the weight ratio of the soluble starch, polyethylene glycol PEG-2000, and graphene added was changed to 1.24:1:0.4.

After the second calcination, the two organic carbon sources of the soluble starch and the polyethylene glycol PEG-2000 in the carbon layer were converted into amorphous carbon portions, the inorganic carbon source graphene was converted into an inorganic carbon portion, a mass ratio of the carbon layers provided by the three was 4:5:1. That is, based on a total weight of the carbon layers being 100%, a weight percentage of the inorganic carbon portion was 10%.

### Embodiment 7

A method for preparing a cathode electrode material:
Differences between this embodiment and Embodiment 1 only lied in that, in the carbon source added in step (3), the content of the carbon layer in the finally obtained cathode electrode material was changed to 1.5%, the carbon source only included the soluble starch and the polyethylene glycol PEG-2000, a ratio of the soluble starch to the polyethylene glycol PEG-2000 added was 1.56:1, a mass ratio of the carbon layers respectively provided by the soluble starch and polyethylene glycol PEG-2000 in the obtained carbon layers was 1:1, and the inorganic carbon portion was 0%.

### Embodiment 8

A method for preparing a cathode electrode material:
A difference between this embodiment and Embodiment 1 only lied in that, the carbon source added in step (3) only included the soluble starch, and the carbon layer provided by the soluble starch accounted for 3% of the obtained cathode electrode material.

### Embodiment 9

A method for preparing a cathode electrode material:
A difference between this embodiment and Embodiment 1 only lied in that, the carbon source added in step (3) only included the polyethylene glycol PEG-2000, and the carbon layer provided by the polyethylene glycol PEG-2000 accounted for 3% of the obtained cathode electrode material.

### Embodiment 10

A method for preparing a cathode electrode material:
A difference between this embodiment and Embodiment 1 only lied in that, the total amount of the carbon source in step (3) was changed to cause the mass fraction of the carbon layer in the finally obtained cathode electrode material to be changed to 1%.

### Embodiment 11

A method for preparing a cathode electrode material:
A difference between this embodiment and Embodiment 1 only lied in that, the total amount of the carbon source in step (3) was changed to cause the mass fraction of the carbon layer in the finally obtained cathode electrode material to be changed to 4%.

### Embodiment 12

A method for preparing a cathode electrode material:
A difference between this embodiment and Embodiment 1 only lied in that, calcination conditions in step (4) were different, and details were as follows:
First-stage calcination with a temperature being 30 °C and temperature-holding time for the first-stage calcination being 2.5 h;
second-stage calcination with a temperature being 80 °C and temperature-holding time for the second-stage calcination being 2 h;
third-stage calcination with a temperature being 240 °C and temperature-holding time for the third-stage calcination being 1 h; and
fourth-stage calcination with a temperature being 650 °C and temperature-holding time for the fourth-stage calcination being 1 h.

### Embodiment 13

A method for preparing a cathode electrode material:
A difference between this embodiment and Embodiment 1 only lied in that, calcination conditions in step (4) were different, and details were as follows;
First-stage calcination with a temperature being 70 °C and temperature-holding time for the first-stage calcination being 0.5 h;
second-stage calcination with a temperature being 140 °C and temperature-holding time for the second-stage calcination being 0.3 h;
third-stage calcination with a temperature being 150 °C and temperature-holding time for the third-stage calcination being 5 h; and
fourth-stage calcination with a temperature being 450 °C and temperature-holding time for the fourth-stage calcination being 7 h.

### Embodiment 14

A method for preparing a cathode electrode material:
A difference between this embodiment and Embodiment 1 only lied in that, calcination conditions in step (4) were different, and details were as follows:
First-stage calcination with a temperature being 200 °C and temperature-holding time for the first-stage calcination being 3 h; and
second-stage calcination with a temperature being 550 °C and temperature-holding time for the second-stage calcination being 4 h.

An SEM characterization result diagram of the obtained cathode electrode material was shown in Fig. 2.

### Embodiment 15

A method for preparing a cathode electrode material:
A difference between this embodiment and Embodiment 1 only lied in that, calcination conditions in step (4) were different, and details were as follows:
One-stage calcination was only performed with a temperature being 550 °C and temperature-holding time being 4 h.

An SEM characterization result diagram of the obtained cathode electrode material was shown in Fig. 3.

### Embodiment 16

A method for preparing a cathode electrode material:
A difference between this embodiment and Embodiment 1 only lied in that, the sodium source, iron source, phosphorus source, and carbon source used were mixed at the same time, and water was used as a dispersion medium, so as to obtain a slurry; and the cathode electrode material was obtained based on the drying calcination condition in step (2) in Embodiment 1.

### Embodiment 17

A method for preparing a cathode electrode material:
A difference between this embodiment and Embodiment 1 only lied in that, the heating rates of the four stages of calcination in step (4) were changed to 3 °C/min.

### Embodiment 18

A method for preparing a cathode electrode material:
A difference between this embodiment and Embodiment 1 only lied in that, the heating rates of the four stages of calcination in step (4) were changed to 10 °C/min.

### Embodiment 19

A method for preparing a cathode electrode material:
A difference between this embodiment and Embodiment 1 only lied in that, the heating rates of the four stages of calcination in step (4) were changed to 2 °C/min.

### Embodiment 20

A method for preparing a cathode electrode material:
A difference between this embodiment and Embodiment 1 only lied in that, the heating rates of the four stages of calcination in step (4) were changed to 12 °C/min.

### Embodiment 21

A method for preparing a cathode electrode material:
A difference between this embodiment and Embodiment 1 only lied in that, calcination conditions in step (2) were different, and details were as follows.

First-time calcination was heated from room temperature to 350 °C at 5 °C/min and performed for 3 h, and second-time calcination was heated from 350 °C to 500 °C at 5 °C/min and performed for 11 h, so as to obtain a precursor.

### Embodiment 22

A method for preparing a cathode electrode material:
A difference between this embodiment and Embodiment 1 only lied in that, calcination conditions in step (2) were different, and details were as follows.

First-time calcination was heated from room temperature to 550 °C at 5 °C/min and performed for 1 h, and second-time calcination was heated to 700 °C at 5 °C/min and performed for 13 h, so as to obtain a precursor.

### Comparative example 1

A method for preparing a cathode electrode material:
A difference between this comparative example and Embodiment 1 lied in that, the amounts of various raw materials added changed to obtain the cathode electrode material with a mole ratio of olivine type phosphate to polyanionic phosphate in a composite particle to be 0:1.

### Comparative example 2

A method for preparing a cathode electrode material:
A difference between this comparative example and Embodiment 1 lied in that, the amounts of various raw materials added changed to obtain the cathode electrode material with a mole ratio of olivine type phosphate to polyanionic phosphate in a composite particle to be 0.1:1.

### Comparative example 3

A method for preparing a cathode electrode material:
A difference between this comparative example and Embodiment 1 lied in that, the amounts of various raw materials added changed to obtain the cathode electrode material with a mole ratio of olivine type phosphate to polyanionic phosphate in a composite particle to be 0.8:1.

### Comparative example 4

A method for preparing a cathode electrode material:
A difference between this comparative example and Embodiment 1 lied in that, the amounts of various raw materials added changed to obtain the cathode electrode material with a mole ratio of olivine type phosphate to polyanionic phosphate in a composite particle to be 1:1.

### II. Test method

D50: GB/T19077, particle size analysis laser diffraction method.
BET: GB/T19587, determination of the specific surface area of solids by gas adsorption using the BET method.
Bowl packing rate: GB/T5000-2017, determination of powder packing density of powder metallurgy parts.
Compaction density: GB/T24533, powder compaction density determination.
Tap density: GB/T5162-2021, powder tap density determination.
Powder internal resistance: a four-probe method being used for testing under a pressure of 10 MPa.

### Battery performance test:

(1) Preparation of cathode electrode sheet: the cathode electrode materials obtained in the embodiments and comparative examples were respectively mixed with acetylene black (as a conductive agent) and Polyvinylidene Fluoride (PVDF, as an adhesive) based on a mass ratio being 88:6:6, with mass accuracy of 0.001 g, so as to form a cathode electrode slurry. The cathode electrode sheet used aluminum foil as a current collector. The cathode electrode material, the acetylene black, the PVDF, and N-methyl-2-pyrrolidone were stirred and slurried to obtain the cathode electrode slurry, the cathode electrode slurry was uniformly coated on the aluminum foil, dried in a 100 °C oven, and then cut into electrode sheets with a diameter of 18 mm and a thickness of 0.10 mm, the electrode sheets were weighed, and mass was accurate to 0.0001 g.
(2) Battery assembly: in an inert gas glove box of which water and oxygen contents were both less than or equal to 0.0005%, a metal sodium sheet was used as a negative electrode sheet, a polypropylene microporous film was used as a diaphragm, and sodium-ion battery electrolyte consisting of 1 mol/L sodium perchlorate (NaClO₄) and a mixed carbonate-based organic solvent [Ethylene Carbonate (EC)/Diethyl Carbonate (DEC)/Fluoroethylene Carbonate (FEC) (a volume ratio of EC, DEC, and FEC was 1:1:0.05)] was assembled and sealed to form a test battery.
(3) Battery test: the test battery was subjected to a charge-discharge cycle at 25 °C on a sodium-ion battery electrochemical performance tester (LANHE CT2001A battery test system).
   (a) Current charging was performed at a rate of 0.2 C, and a limited charge voltage was 4.0 V.
   (b) Current discharging was performed at the rate of 0.2 C, and a discharge cut-off voltage was 2.0 V.

Test results were shown in Table 1 and Table 2.

**Table 1**

| | Specific surface area m²/g | Bowl packing rate% | Compaction density g/cm³ | Tap density g/mL | Powder resistivity Ω.cm |
|---|---|---|---|---|---|
| Embodiment 1 | 12.30 | 76.00 | 2.15 | 1.19 | 17050.00 |
| Embodiment 2 | 12.00 | 75.38 | 2.16 | 1.17 | 18900.00 |
| Embodiment 3 | 11.71 | 75.47 | 2.13 | 1.14 | 19900.00 |
| Embodiment 4 | 11.35 | 75.33 | 2.12 | 1.19 | 21500.00 |
| Embodiment 5 | 14.63 | 76.03 | 2.08 | 1.18 | 32070.00 |
| Embodiment 6 | 12.00 | 76.00 | 2.18 | 1.19 | 12000.00 |
| Embodiment 7 | 17.82 | 75.01 | 1.90 | 1.13 | 75060.00 |
| Embodiment 8 | 13.69 | 75.73 | 1.98 | 1.14 | 47060.00 |
| Embodiment 9 | 30.56 | 74.99 | 1.80 | 1.10 | 30070.00 |
| Embodiment 10 | 9.78 | 75.82 | 2.17 | 1.18 | 87500.00 |
| Embodiment 11 | 48.93 | 72.00 | 1.70 | 1.05 | 15000.00 |
| Embodiment 12 | 34.75 | 70.32 | 1.99 | 1.16 | 92500.00 |
| Embodiment 13 | 12.81 | 75.93 | 2.11 | 1.17 | 38500.00 |
| Embodiment 14 | 15.93 | 68.00 | 1.98 | 1.15 | 27800.00 |
| Embodiment 15 | 21.55 | 62.00 | 1.80 | 1.10 | 64500.00 |
| Embodiment 16 | 17.83 | 60.00 | 1.89 | 0.90 | 77700.00 |
| Embodiment 17 | 13.67 | 75.49 | 2.10 | 1.18 | 17600.00 |
| Embodiment 18 | 35.67 | 72.30 | 1.98 | 1.17 | 18400.00 |
| Embodiment 19 | 12.85 | 75.01 | 2.12 | 1.19 | 86000.00 |
| Embodiment 20 | 40.00 | 71.20 | 1.95 | 1.15 | 20500.00 |
| Embodiment 21 | 13.45 | 75.88 | 2.13 | 1.18 | 22700.00 |
| Embodiment 22 | 14.58 | 75.00 | 2.01 | 1.16 | 24600.00 |
| Comparative example 1 | 14.39 | 75.52 | 1.99 | 1.17 | 25500.00 |
| Comparative example 2 | 13.29 | 75.62 | 1.99 | 1.18 | 21000.00 |
| Comparative example 3 | 18.93 | 74.95 | 1.96 | 1.13 | 27600.00 |
| Comparative example 4 | 20.81 | 74.00 | 1.97 | 1.11 | 29500.00 |

**Table 2**

| | First charging specific capacity, mAh/g | First discharging specific capacity, mAh/g | Discharging efficiency, % |
|---|---|---|---|
| Embodiment 1 | 118.73 | 104.15 | 87.72 |
| Embodiment 2 | 119.52 | 104.94 | 87.80 |
| Embodiment 3 | 117.84 | 103.53 | 87.86 |
| Embodiment 4 | 109.92 | 97.05 | 88.29 |
| Embodiment 5 | 118.83 | 104.12 | 87.62 |
| Embodiment 6 | 113.96 | 101.16 | 88.77 |
| Embodiment 7 | 113.12 | 100.15 | 88.53 |
| Embodiment 8 | 110.69 | 97.15 | 87.77 |
| Embodiment 9 | 112.85 | 99.69 | 88.34 |
| Embodiment 10 | 115.16 | 102.87 | 89.33 |
| Embodiment 11 | 116.94 | 104.06 | 88.99 |
| Embodiment 12 | 116.76 | 103.76 | 88.87 |
| Embodiment 13 | 115.84 | 102.45 | 88.44 |
| Embodiment 14 | 113.32 | 100.25 | 88.47 |
| Embodiment 15 | 112.71 | 99.69 | 88.45 |
| Embodiment 16 | 110.34 | 98.08 | 88.89 |
| Embodiment 17 | 117.13 | 103.64 | 88.48 |
| Embodiment 18 | 117.06 | 103.29 | 88.24 |
| Embodiment 19 | 116.74 | 102.42 | 87.73 |
| Embodiment 20 | 116.87 | 102.99 | 88.12 |
| Embodiment 21 | 115.73 | 102.59 | 88.65 |
| Embodiment 22 | 115.05 | 102.03 | 88.68 |
| Comparative example 1 | 109.73 | 96.14 | 87.62 |
| Comparative example 2 | 109.68 | 95.83 | 87.37 |
| Comparative example 3 | 107.56 | 94.81 | 88.15 |
| Comparative example 4 | 107.98 | 94.51 | 87.53 |

### III. Test result analysis for embodiments and comparative examples

From the above results, it might be learned that, according to the embodiments of the present application, the preparation of the sodium-ion battery cathode electrode material with excellent electrochemical performance was achieved. Specifically:
by comparing the embodiments with the comparative examples, it might be learned that, for the cathode electrode material prepared in the present application, a mole ratio of the olivine type phosphate to the polyanionic phosphate was (0.2-0.5):1, and the polyanionic phosphate phase coated the nano crystals of the olivine type phosphate. Compared to a conventional iron-based phosphate sodium electric material, the cathode electrode material prepared in the present application showed more excellent performance, and showed higher first charging specific capacity and first discharging specific capacity after being used as the cathode electrode material to prepare the sodium-ion battery.

From Embodiments 1 to 3 and Embodiment 4, as well as Comparative examples 1 to 4, it might be learned that, when a mole ratio of the olivine type phosphate to the polyanionic phosphate was (0.2-0.5):1, especially (0.2-0.4):1, compatibility between the olivine type phosphate phase and the polyanionic phosphate phase was better, and the electrochemical performance of the obtained cathode electrode material was more excellent.

Comparing Embodiments 1 to 3 with Embodiments 5 to 9, it might be learned that, preferably, the carbon layer was the amorphous carbon portion formed by the organic carbon source and the inorganic carbon portion formed by the inorganic carbon source, and the weight percentage of the inorganic carbon portion was 2.5%-5.0%, such that two carbon layers with different characteristics and functions were promoted to work synergistically, thereby further improving the electrochemical performance of the cathode electrode material. In particular, when the carbon source was preferably specifically the soluble starch, the polyethylene glycol, and the graphene, and the ratio of addition amounts of the soluble starch, the PEG-2000, and the graphene was (1.2-1.5):1:(0.2-0.4), preferably (1.25-1.5):1:(0.2-0.3), better coordination of the superior performance of the graphene, the polyethylene glycol, and the soluble starch was achieved, so as to obtain the carbon layer with uniform coating and good conductivity, thereby improving the electrochemical performance of the obtained cathode electrode material.

Comparing Embodiments 1 to 3 with Embodiments 10 and 11, it might be learned that, based on the total weight of the cathode electrode material being 100%, when the mass fraction of the carbon layer was 1.5%-3.0%, the electron transport capability and stability of the obtained cathode electrode material can be better balanced, thereby improving the electrochemical performance of the cathode electrode material.

Comparing Embodiments 1 to 3 with Embodiment 16, it might be learned that, compared to a one-step method commonly used in the art, the two-step method used in the embodiments of the present application is more helpful to improve the electronic conductivity, compaction density and tap density of the obtained cathode electrode materia, so as to obtain the cathode electrode material with higher electrochemical performance.

Comparing Embodiments 1 to 3 with Embodiments 21 and 22, it might be learned that, in the process of forming the precursor during the first calcination, the calcination process was controlled to be first-time calcination and second-time calcination, in which the temperature of the first-time calcination was 400 °C-500 °C, and the time for the first-time calcination was 1.5 h-2.5 h; and the temperature of the second-time calcination was 550 °C-650 °C, and the time for the second-time calcination was 10 h-14 h, such that the formation of the precursor with high phase purity can be promoted, thereby improving the electrochemical performance of the obtained cathode electrode material.

Comparing Embodiments 1 to 3 with Embodiments 12 to 15, it might be learned that, in the process of forming the polyanionic phosphate during the second-time calcination, the second calcination was optimized into four stages, and at the same time, a temperature range and a calcination duration were accurately controlled, such that segmented decomposition of the carbon source mixed with the precursor could be achieved, and the degradation of the electrochemical performance of the obtained cathode electrode material was suppressed at the same time. Meanwhile, the two crystal phases could also be better compounded, thereby significantly improving the obtained cathode electrode material.

Comparing Embodiments 1 to 3 with Embodiments 17 to 20, it might be learned that, the heating rate of 3 °C/min-10 °C/min could promote the improvement of the phase purity and crystallinity of the obtained cathode electrode material, causing the cathode electrode material to show higher electrochemical performance.

It is to be noted that the present application is not limited to the aforementioned embodiments. The above embodiments are only illustrative, and embodiments that have the substantially same composition and play the same acting role as the technical idea within the scope of technical solution of the present application are all included in the technical scope of the present application. In addition, other embodiments constructed by applying various variations that can be thought of by those skilled in the art and by combining some constituent elements of the embodiments without departing from the scope of the main idea of the present application are also included in the scope of the present application.

## Claims

1. A cathode electrode material, comprising a composite particle, wherein a molecular formula of the composite particle is represented by NaₓFe_{y}(PO₄)ₙ(P₂O₇)ₘ, wherein x is 4.2-4.5, y is 3.2-3.5, n is 2.2-2.5, and m is 0.9-1.1; and
the composite particle comprises olivine type phosphate and polyanionic phosphate coated on the olivine type phosphate, and a molar ratio of the olivine type phosphate to the polyanionic phosphate is (0.2-0.5):1.

2. The cathode electrode material according to claim 1, wherein a molar ratio of the olivine type phosphate to the polyanionic phosphate is (0.2-0.4):1.

3. The cathode electrode material according to claim 1 or 2, wherein the cathode electrode material further comprises a carbon layer coated on the composite particle, based on a total weight of the cathode electrode material being 100%, a mass fraction of the carbon layer is 1.5%-3.0%;
preferably, the carbon layer is an amorphous carbon portion formed by an organic carbon source and/or an inorganic carbon portion formed by an inorganic carbon source; and
more preferably, the carbon layer is a combination of an amorphous carbon portion and an inorganic carbon portion, and based on a total weight of the carbon layer being 100%, a weight percentage of the inorganic carbon portion is 2.5%-5.0%.

4. The cathode electrode material according to any one of claims 1 to 3, wherein powder resistivity of the cathode electrode material is 12000 Ω·cm-93000 Ω·cm.

5. A method for preparing a cathode electrode material, wherein the method for preparing a cathode electrode material comprises:
preparing a sodium source, an iron source, and a phosphorus source into a first slurry;
performing first drying and first calcination on the first slurry to obtain a precursor;
preparing the precursor and a carbon source into a second slurry; and
performing second drying and second calcination on the second slurry to obtain the cathode electrode material.

6. The method for preparing a cathode electrode material according to claim 5, wherein in the first slurry, a molar ratio of sodium, iron, and phosphorus is (4.2-4.86): (3.2-3.5): (4.2-4.5);
preferably, the first calcination comprises first-time calcination and second-time calcination, which are performed in sequence;
a temperature of the first-time calcination is 400 °C-500 °C, and time for the first-time calcination is 1.5 h-2.5 h; a temperature of the second-time calcination is 550 °C-650 °C, and time for the second-time calcination is 10 h-14 h; and more preferably, the first calcination is performed under a protective atmosphere.

7. The method for preparing a cathode electrode material according to claim 6, wherein the sodium source is selected from one or more of sodium bicarbonate, sodium phosphate, sodium monohydrogen phosphate, and sodium dihydrogen phosphate; the iron source is selected from one or more of anhydrous iron phosphate, iron phosphate polyhydrate, iron monohydrogen phosphate, and ferrous oxalate; the phosphorus source is selected from one or more of anhydrous iron phosphate, ammonium dihydrogen phosphate, sodium phosphate, sodium monohydrogen phosphate, sodium dihydrogen phosphate, iron phosphate polyhydrate, and iron monohydrogen phosphate;
preferably, the carbon source comprises an organic carbon source and/or an inorganic carbon source;
preferably, the organic carbon source is selected from one or more of citric acid, glucose, sucrose, soluble starch, and polyethylene glycol; and/or the inorganic carbon source is selected from one or more of graphite, a carbon nanotube, and graphene;
preferably, the carbon source comprises the soluble starch, the polyethylene glycol, and the graphene; and
more preferably, the polyethylene glycol is PEG-2000.

8. The method for preparing a cathode electrode material according to any one of claims 5 to 7, wherein the second calcination comprises the following performed in sequence:
first-stage calcination with a temperature being 40 °C-60 °C and temperature-holding time for the first-stage calcination being 1 h-2 h;
second-stage calcination with a temperature being 100 °C-130 °C and temperature-holding time for the second-stage calcination being 0.5 h-1.5 h;
third-stage calcination with a temperature being 180 °C-210 °C and temperature-holding time for the third-stage calcination being 2 h-4 h; and
fourth-stage calcination with a temperature being 500 °C-600 °C and temperature-holding time for the fourth-stage calcination being 2 h-6 h;
preferably, heating rates of the first-stage calcination, second-stage calcination, third-stage calcination, and fourth-stage calcination are each independently 3 °C/min-10 °C/min.

9. A cathode electrode sheet, comprising the cathode electrode material according to any one of claims 1 to 4, or a cathode electrode material prepared by the method for preparing a cathode electrode material according to any one of claims 5 to 8.

10. A sodium-ion battery, comprising the cathode electrode sheet according to claim 9.
